# EUROPEAN PATENT SPECIFICATION

(11) **EP 1 521 707 B1**
(45) Date of publication and mention of the grant of the patent: **24.05.2006**
(21) Application number: 03736002.1
(22) Date of filing: 20.06.2003
(51) Int. Cl.: B65B 69/00, B65G 59/00

(54) **A PROCESS FOR REMOVING A PACKING FILM FROM A PALLETIZED STACKED LOAD**
VERFAHREN ZUR ENTFERNUNG EINER PACKUNGSFOLIE VON PALETTENGEBINDEN
PROCEDE DE RETRAIT D'UN FILM D'EMBALLAGE D'UNE CHARGE EMPILEE PALETTISEE

(30) Priority: 12.07.2002 IT MO20020202
(43) Date of publication of application: 13.04.2005
(73) Proprietor: Bortolin Kemo S.P.A., 33080 Porcia (Pordenone) (IT)
(72) Inventor: SAIN, Marino, I-33080 Roveredo in Piano (IT)
(74) Representative: Gotra, Stefano
(86) International application number: PCT/IT2003/000383
(87) International publication number: WO 2004/007295

(56) References cited:
- WO-A-93/11043
- DE-A- 4 315 050
- DE-A- 4 329 180

## Description

### Technical Field

The invention relates to a machine for removing a film packing a multi-layer stacked load on a pallet.

Specifically, though not exclusively, the invention is usefully applied in the field of removing protective packing film from pallets on which containers are stacked, for example plastic or glass bottles.

### Background Art

Pallets stacked in this way generally comprise several stacked layers of bottles, the layers being separated by generally plastic or pressed cardboard separators and the whole stack being covered by a heat-shrinkable or stretchable covering film. The topmost layer of bottles is covered by a cardboard sheet, usually shaped as an upturned tray, the main function of which is to prevent damage to the protective film and to stabilize the load when the film is not present.

Before using the containers (for example in a packing line) the pallet must be freed of the packing, i.e. the film packing and the top cardboard sheet, and then the stack of containers must be depalletized, layer by layer with the cardboard separators being removed as the containers are gradually transferred towards other zones.

Depalletizers already exist in the prior art, which can be combined with de-packers that are, however, rather complex and expensive. The de-packer, normally upstream of the depalletizer, removes all of the packing film, so that the multi-layer palletized load is transferred to the depalletizer when the film has already been removed, i. e. it is transferred with the stabilizing effect of the film removed and is therefore unstable and difficult to transfer.

Document DE 43 29 180 discloses a method for the depalletisation of a pallet stack and machine for carrying out the method. A pallet loaded with articles in layers is fed, together with the wrapping serving as a transport safeguard, to a machine for depalletisation. The articles are secured against displacement relative to one another in the machine, and the wrapping is destroyed in the region where the individual layers touch one another. The particular uppermost layer, together with the part of the wrappings surrounding the layer, is thereupon removed from the stack.

Document WO 93/11043 discloses an equipment to carry out automatically the complete depalletization of empty glass or plastic bottles or phials from multi-layer packages prior to their filling, providing the previous cutting of the wrapping film level with each layer of bottles. The equipment comprises a first station for the positioning and preparation to cutting on a revolving platform, a station for the multiple cutting with a series of rotating blades arranged on horizontal independent retractable arms positioned one above the other, a device for the removal of the top part of the package, as well as a forklift device capable of lifting successively the subsequent layers of bottles to take them to the level of the top one, so that they can be picked up one at a time by a known-type device for the conveying to a second platform or station of complete depalletization through separation of the plastic film cut strip and of the lower sheet of each layer of bottles, to be conveyed one at a time to the bottling line, and a package materials dumping station with pallet storage level with the bottom layer.

The main aim of the present invention is to provide a simple machine for de-packing a multi-layer stack.

An advantage of the invention is that it makes available a machine which enables the load to be de-packed at a same work station in which the load is depalletized.

A further advantage of the invention is that it enables a reduction in overall time necessary for the de-packing and de-palletizing of a stacked load.

A further advantage is that the invention guarantees a greater stability and compactness of the palletized load during the stage of removing the film.

A still further advantage is that the invention makes available a de-filming process which increases the stability and compactness of the various layers which are manipulated during the depalletizing stage.

Further advantages of the invention are: reduction of the space needed for de-filming and depalletizing a packed stacked pallet, and reliable functioning which reduces blockages and snagging to a minimum and therefore limits the need for operator intervention.

The aims and advantages and more besides are all attained by the present invention, as it is characterized in the appended claims, in which the packing film is removed in a series of horizontal strips.

In a preferred embodiment of the invention, the packing film of the stack is removed in a succession of horizontal cut strips, with a measured cut that separates the pallet into one or more layers of containers at a time; the annular strip formed after each cut is removed together with the layer of containers it formerly enveloped, so that in effect the load is depalletized by removing one layer of containers at a time together with the previously-cut horizontal strip of film.

### Disclosure of Invention

Further characteristics and advantages of the present invention will better emerge from the detailed description that follows, of a preferred but non-exclusive embodiment of the invention, illustrated purely by way of example in the appended figures of the drawings, in which:

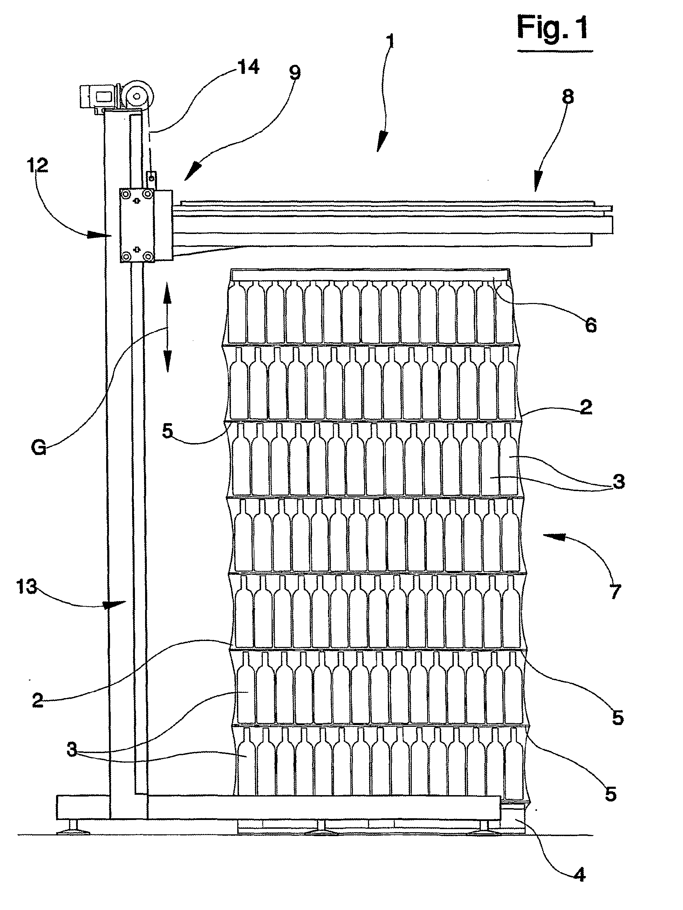

figure 1 is a lateral view in vertical elevation of a machine made according to the invention;
figure 2 is a plan view from above of figure 1;
figure 3 is an enlarged-scale detail of figure 2;
figure 4 is a lateral view from below of figure 3.

With reference to the figures of the drawings, 1 denotes in its entirety a cutting device for a de-packing machine, for removing a protective film from a multi-layer stack. The protective film is preferably a film 2 made of heat-shrinkable plastic material, but can also be, for example, a film made of stretchable elastic. The multi-layer film comprises, in the embodiment, a plurality of stacked layers of bottles 3; application of the film could also be made on other types of containers, either plastic or glass, or even, more generally, other types of packings constituted by a multi-layer stack tightly enveloped by a film. The stack is palletized, i.e. supported by a base pallet 4 which facilitates transport thereof. The various layers are divided by separators 5, normally constituted by sheets of plastic bubble-wrapping. The stack of layers is topped by a tray-shaped sheet 6 of cardboard. The whole packaging is enveloped and tightly held by the heat-shrunk plastic film 2.

The machine 1 comprises a housing station 7 for the stacked load where the palletized load is taken (by known means of transfer) to be depacked.

The machine 1 further comprises a ringed horizontal guide 8 which surrounds the packing located in the housing station 7.

A slide 9 or other mobile support organ is mobile along the horizontal guide 8, which bears a cutter 10 predisposed to cut the protective film 2 in at least one horizontal cutting direction passing around the load in a 360° cycle. The slide 9 which bears the cutter 10 is actuated in horizontal movement along the guide 8 by a flexible organ, for example a chain 11, drawn by a pulley; it is possible for the slide 9 to be drawn by other means, of known type.

The horizontal guide 8 is borne by a mobile support 12 which can be commanded to move vertically along a guide 13 in both vertical directions, for positioning the cutter 10 at a correct height with respect to the package located in the housing station 7. The means commanding the vertical displacements of the mobile support 12 can comprise, for example, a flexible organ 14 drawn by a drive wheel.

The horizontal guide 8 exhibits various straight tracts or branches, which in the embodiment are four in number and arranged reciprocally at 90°, each being parallel to a respective face of a parallelepiped package located in the housing station 7, joined together by curved connection tracts for realizing the ringed closed pathway along which the mobile cutter 10 moves when cutting the film 2.

The cutter 10 is further able to make a nearing and distancing movement F to and from the multi-layer load located in the central housing station 7. This movement F, which is for positioning the cutting part of the cutter 10 in contact with the film 2, is controlled with the help of a linear actuator 15 having a displacement axis which is perpendicular to the guide 8 which defines the annular pathway of the cutter 10. The initial positioning means of the cutter 10 are predisposed for commanding a movement causing a horizontal nearing of the cutter 10 to the film 2 to be cut, a positioning above the edge of the separator 5 in which the blade of the cutter 10 makes a movement which includes a downwards vertical component which guarantees penetration of the blade into the stack at a position which is above the separator 5, then descending to make contact with the separator 5, and a final advancement in which the blade slightly enters the stacked load in a free space between two adjacent containers at the periphery of the stack.

The cutter 10 is preferably equipped with a horizontal blade which cuts the film 2 at the level of the base of the containers, immediately above the separator 5, and which can perform, with respect to the support 9, a vertical compensation movement following the action of elastic means which press the blade downwards to enable the blade, during the film-cutting operation , to rest more or less continuously on the edge of the separator 5, even in cases where the separator 5 is corrugated or in any case not perfectly flat. Preferably the blade exhibits, both below and above the cutter, an inclined surface in order to prevent any cutting of the containers or the separator 5. To ensure a correct cutting of the film the blade enters slightly below the containers, at a position corresponding to the chamfered part of the base edge of the containers.

The mobile support 9 which bears the cutter 10 is provided with a safety clutch mechanism (not illustrated) which blocks the horizontal cutting motion when the force necessary for the cut exceeds a set threshold limit. This is to avoid a situation in which a blunt or broken blade might lead the cutting mechanism to tear the film 2 and drag it away, with a consequent risk of the load's being tipped over.

The machine functions as follows.

The multi-layer stack, palletized and wrapped with film 2, is positioned in the housing station 7 internally of the mobile annular equipment which comprises the ringed guide 8 and the mobile support 9 bearing the cutter 10. The cutter 10 is then positioned, by means of vertical displacements of the guide 8, at the predetermined height in proximity of the base of the topmost layer of the stack.

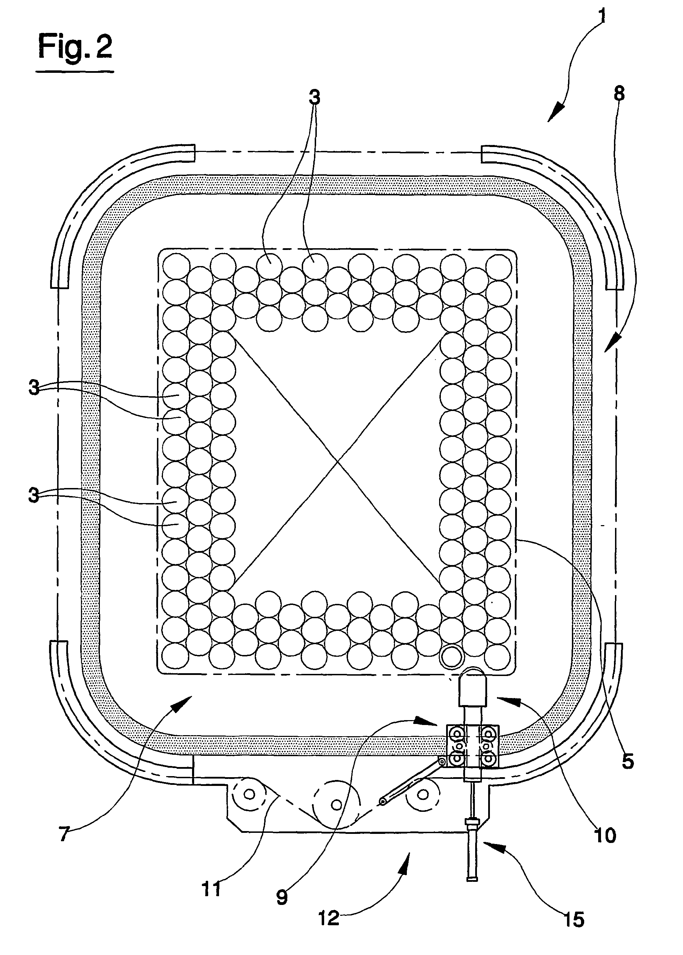

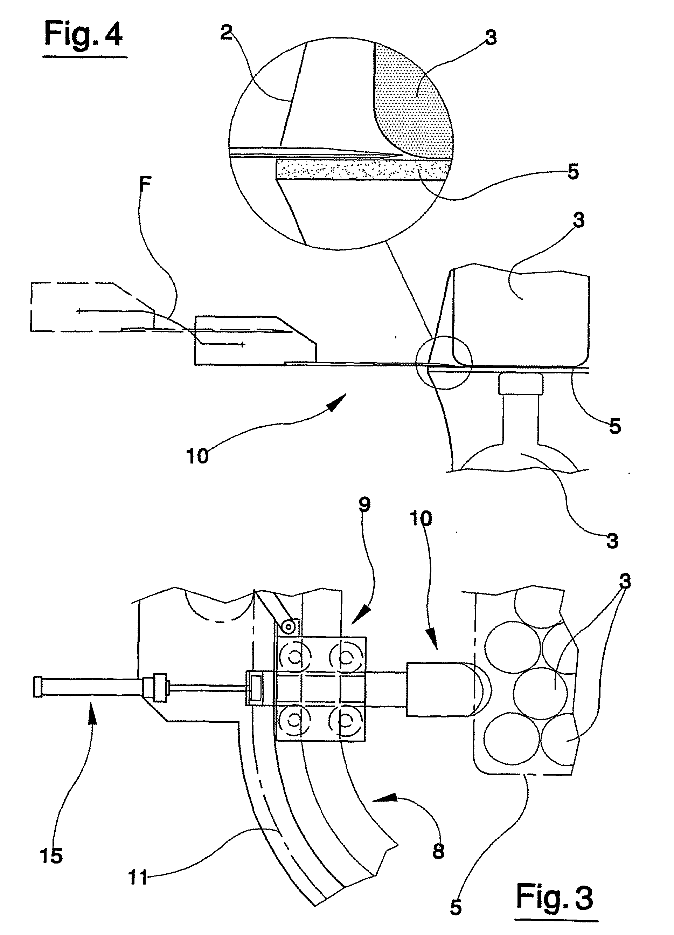

The cutter 10 is neared to the film 2 to be cut by means of a frontal displacement towards the load, until it enters the stack, cutting the film 2, in the space between the lower chamfered base of the containers 3 and the separator 5 between the layers. Preferably the start of the horizontal cut, i.e. the point of frontal insertion of the blade, occurs in a zone where two containers 3 are not directly touching each other (see figures 2 and 3); this start-cut zone can usually easily be identified beforehand as the size of the palletized loads, as well as the dimensions and arrangements of the containers in the loads, are standardized and therefore can be identified from a knowledge of the type of load and containers; the identification of the type of load and containers means that the machine can be pre-set and therefore that the start-cut operation be located exactly at a predetermined point along the closed annular pathway described by the guide. The point chosen is generally one where two containers 3, close to one another and located at a same height on the periphery of the load, are distanced from each other by an empty space. As mentioned above, the blade is inserted at the preselected point following a complex coordinated movement F; a frontal nearing and at the same time a translation in a downwards vertical direction until the blade rests on the edge of the separator 5. At this point, after the blade has been inserted, the horizontal cut along the pathway of the closed ring begins. The horizontal cut causes the formation of an annular strip of film associated to the upper layer of the load and separated from the rest of the film. At this point the topmost layer of containers 3, still enveloped and held tight by the strip of film 2, can be removed from the load, which is at the same time depalletized using known processes, for example the processes used in depalletizers of known type.

The remaining part of the multi-layer stack is still enveloped and held tight by the rest of the packing film 2. After the layer of containers has been removed from the stack, the annular strip of heat-shrinkable film 2 laterally embracing the containers is removed, as is the top sheet of cardboard 6 which covers the top of the stack. Removal of the annular strip is done by making a vertical cut on one side of the strip and pulling the strip away from the opposite side.

The top sheet of cardboard 6 covering the topmost layer of containers can be removed together with the relative strip of film 2 and separated therefrom afterwards. Alternatively, the cardboard 6 sheet can be removed beforehand, separately from the layer of containers 3, by making a horizontal cut of the film 2, with a closed cut, in proximity of the cardboard sheet 6, so as to separate the upper part of the film 2 which is distanced together with the cardboard sheet 6. The above operations, i.e. the cutting of the film 2 along a closed horizontal cutting line to form an annular strip about the topmost layer of the stack, the distancing of the layer still enveloped by the strip and the subsequent separation of the annular strip from the layer, are cyclically repeated for each successive layer which becomes the new topmost layer of the stack as the cutting operation progresses.

Preferably the layer at the top of the stack is removed, though it is also possible to remove the layers starting from bottommost layer.

During operation, the above-described machine 1 performs a process for removing a wrapping film 2 which envelopes a palletized multi-layer load, which process cyclically comprises the following stages: a) horizontally cutting the film 2 by means of a complete circumscription of the load, preferably at a height corresponding to a base of a single layer of the stacked load, to form an annular strip of film 2; b) distancing the annular strip from the stacked load.

Each of the above-mentioned stages, a) and b), of cutting and distancing the annular strip of film are carried out cyclically up until the film 2 has been completely removed. Each strip of film is removed, preferably but not necessarily, together with the layer or layers of the stacked load located superiorly of the horizontal cut line, while still surrounded by the cut strip. Thereafter, the strip, while still embracing the layer or layers of containers with which it has been removed from the stack, is subjected to a vertical cut on one side, after which it is separated from the layer or layers of containers by being pulled from the opposite side from which the vertical cut has been made.

As mentioned herein above, a separator 5 is located at the base of each layer of containers; the horizontal cut is made just above the separator 5.

Generally the packaged elements, arranged one by the side of another, forming together a layer of the load, have a chamfered bottom side (for example the commonest plastic or glass containers have a chamfered rather than a sharp edge). The horizontal cut is made by a blade which is inserted between the separator 5 and the elements located at the periphery of the load, and precisely at a position corresponding to the chamfered edges of the bottom side of the elements (as is clear from the enlarged detail of claim 4).

The process and machine of the invention enable two operations to be performed (removing a film-packed multi-layer stack and depalletizing it) in a same work station, thus reducing work times while increasing the safety of the operations. Thanks to the process the depalletized layers, even after they have been removed one by one from the pallet, are still enveloped and held laterally by a strip of film which keeps the containers forming the layer together, so that each single layer is especially stable and compact and can be transported and manoeuvred with safety, thus reducing the risk of the containers' separating during transfer.

Further, as the film is removed in strips, and not all at once, the palletized load remaining in the housing station stays enveloped and tightly held by a part of the same film, and therefore does not lose its stability and compactness during the depacking and depalletizing operations.

The described embodiment includes a cutter which moves horizontally about the palletized and packaged load; however it would be possible to have a palletized load rotating about itself around a vertical axis and a fixed cutting organ (as the palletized load is normally parallelepiped and in any case not a body of revolution) having a frontal linear motion in a horizontal direction, following the parallelepiped shape of the load in such a way as to keep the blade continuously in contact with the film and slightly internal of the load perimeter by a predetermined and relatively small quantity, to ensure that the blade does not interfere with the containers.

In the described embodiment the cutter comprises a blade with a fixed metal cutting part; other types of cutting organs could be used, however, such as for example blade having a hot-wire cutter, a rotary disc cutter or a muley saw, a high-energy cutter or a hydraulic blade, and so on.

In the illustrated embodiment a machine with a single cutting organ has been described, though it is possible to use a machine with several cutters which can operate simultaneously on a same horizontal plane, mobile on a same annular guide, or operating on different horizontal planes, on different annular guides, simultaneously or in sequence.

The film used for covering the load can be cut into annular horizontal strips first, by making various horizontal cuts around the periphery of the load, and only later (at the same work station or in a subsequent work station) removed in layers, one at a time.

The machine can be provided, in an embodiment which is not illustrated, with position sensors detecting the desired position for starting the horizontal cut of the film. Alternatively, or additionally, the machine can be provided with a central command and control unit preset with the values of the dimensions of existing palletized loads, generally standardized, so that the start-cut position is automatically recoverable by the command and control unit once the standardized typology of the load to be processed has been recognised.

The machine of the invention, which is preferably combined in a single machine with the depalletizer, can however be a separate entity, arranged downstream of the depalletizer.

During the stage of strip-cutting the film wrapping the load, a blocking organ (for example a squaring device of known type) can be used to surround and block the part of the load which is brought each time either below or above the cutting line. In the above-described illustration, each horizontal cut is made immediately above the separator 5 between two levels; it can however be realized in other zones of the load, both above and below the separator 5, such as for example below the separator at the level of the container (bottle) necks which form the layers; in this case, preferably, after the horizontal cut of the film, the layer of containers should be manoeuvred by means of a gripping device operating from above.

## Claims

1. A machine for removing a protective film from a multi-layer stacked load, comprising:
a housing station (7) for the multi-layer stacked load, **characterised in that** it comprises
a ringed horizontal guide (8) surrounding the load when the load is located in the housing station (7);
a mobile cutter (10) which is commanded to move along the horizontal guide (8) for cutting the film (2) in at least one horizontal cut line.

2. The machine of claim 91, wherein the guide (8) can be commanded to displace in a vertical direction both upwards and downwards in order to be correctly height-positioned with respect to the load located in the housing station (7).

3. The machine of claim 1 or 2, wherein the guide (8) has various straight tracts, each being parallel to a face of a multi-layer stacked load located in the housing station (7), which straight tracts are joined together by curved connection tracts.

4. The machine of claim 3, wherein the guide (8) has four sides arranged in a rectangular fashion.

## Patentansprüche

1. Maschine zur Entfernung einer Schutzfolie von einer mehrschichtig gestapelten Ladung, enthaltend:
eine Aufnahmestation (7) für die mehrschichtig gestapelte Ladung, **dadurch gekennzeichnet, dass** sie eine ringförmige horizontale Führung (8) enthält, welche die Ladung umgibt, wenn die Ladung in der Aufnahmestation (7) angeordnet ist;
eine bewegliche Schneidvorrichtung (10), welche angetrieben ist, um sich entlang der horizontalen Führung (8) zum Schneiden der Folie (2) in wenigstens einer horizontalen Schneidlinie zu bewegen.

2. Maschine nach Patentanspruch 1, bei welcher die Führung (8) zur vertikalen Verschiebung nach oben und nach unten angetrieben werden kann, um im Verhältnis zu der in der Aufnahmestation (7) angeordneten Ladung auf der korrekten Höhe positioniert zu werden.

3. Maschine nach Patentanspruch 1 oder 2, bei welcher die Führung (8) verschiedene geradlinige Abschnitte hat, jeder parallel zu einer Fläche einer mehrschichtig gestapelten Ladung, die in der Aufnahmestation (7) angeordnet ist, welche geradlinigen Abschnitte durch gebogene Verbindungsabschnitte miteinander verbunden sind.

4. Maschine nach Patentanspruch 3, bei welcher die Führung (8) vier in rechtwinkliger Weise angeordnete Seiten hat.

## Revendications

1. Machine de retrait d'un film protecteur d'une charge empilée en plusieurs couches, comprenant:
une station d'accueil de la charge palettisée en plusieurs couches, **caractérisée en ce qu'**elle comprend un guide (8) horizontal en anneau fermé entourant la charge lorsque cette dernière est logée dans la station d'accueil (7);
un organe coupant mobile (10) commandé pour se déplacer le long du guide horizontal (8) pour couper le film (2) selon au moins une ligne de coupe horizontale.

2. Machine selon la revendication 1, dans laquelle le guide (8) peut être commandé pour se déplacer dans une direction verticale aussi bien vers le haut que vers le bas de manière à être correctement positionné en hauteur par rapport à la charge disposée dans la station d'accueil (7).

3. Machine selon la revendication 1 ou 2, dans laquelle le guide (8) présente plusieurs zones droites, chacune étant parallèle à une face d'une charge empilée en plusieurs couches disposée dans la station d'accueil (7), lesquelles zones droites sont jointes entre elles par des zones courbées de connexion.

4. Machine selon la revendication 3, dans laquelle le guide (8) présente quatre côtés disposés de manière rectangulaire.
